# FASCICULE DE BREVET EUROPEEN

(11) **EP 2 934 252 B1**
(45) Date de publication et mention de la délivrance du brevet: **12.07.2017**
(21) Numéro de dépôt: 13818317.3
(22) Date de dépôt: 16.12.2013
(51) Int. Cl.: A47J 44/02, A47J 36/06, A47J 43/046, A47J 43/07, A47J 27/00

(54) **APPAREIL ELECTROMENAGER DE PREPARATION CULINAIRE COMPORTANT UN RECIPIENT DE TRAVAIL ET UN DISPOSITIF DE CHAUFFAGE DU CONTENU DU RECIPIENT DE TRAVAIL**
ELEKTRISCHE SPEISENZUBEREITUNGSVORRICHTUNG MIT EINEM ARBEITSBEHÄLTER UND VORRICHTUNG ZUM ERWÄRMEN DES INHALTS DES ARBEITSBEHÄLTERS
ELECTRICAL FOOD PREPARATION APPLIANCE COMPRISING A WORKING CONTAINER AND A DEVICE FOR HEATING THE CONTENTS OF THE WORKING CONTAINER

(30) Priorité: 19.12.2012 FR 1262344
(43) Date de publication de la demande: 28.10.2015
(73) Titulaire: SEB S.A., 69130 Ecully (FR)
(72) Inventeur: GERARD, Emmanuel, 61410 Couterne (FR); RETOUR, Stéphane, 53470 Commer (FR)
(74) Mandataire: Bourrières, Patrice
(86) Numéro de dépôt international: PCT/FR2013/053106
(87) Numéro de publication internationale: WO 2014/096665

(56) Documents cités:
- EP-A1- 1 922 960
- EP-A1- 2 347 685
- FR-A1- 2 960 758
- JP-A- H10 225 368

## Description

La présente invention se rapporte au domaine technique général des appareils électroménagers de préparation culinaire comportant un récipient de travail renfermant un outil entraîné en rotation par un moteur, un dispositif de chauffage du contenu du récipient de travail et un couvercle amovible venant fermer le récipient de travail et se rapporte plus particulièrement à un appareil électroménager dans lequel le couvercle comporte une ouverture pour l'introduction d'ingrédients dans le récipient de travail, au moins un orifice d'échappement de vapeur et un bouchon doseur amovible venant se loger dans l'ouverture pour l'introduction d'ingrédients.

Il est connu, de la demande de brevet FR 2 960 758 déposée par la demanderesse, un appareil de préparation culinaire comprenant un récipient de travail renfermant un outil entraîné en rotation par un moteur, le récipient de travail comportant une résistance chauffante permettant de chauffer le contenu du récipient de travail et un couvercle amovible muni d'une ouverture recevant un bouchon doseur amovible. Dans ce document, le couvercle comporte également un orifice d'échappement de vapeur qui est constitué par des passages ménagés entre le bouchon doseur et la paroi interne du couvercle définissant l'ouverture.

Un tel appareil présente l'avantage de permettre la cuisson des aliments dans le récipient de travail mais présente cependant l'inconvénient de ne pas permettre à l'utilisateur de moduler la section de passage de l'orifice d'échappement de vapeur pour adapter aux recettes et ingrédients à cuir. En effet, certains ingrédients sensibles à la chaleur demandent une section de passage importante pour permettre un fort échappement de vapeur alors que d'autres ingrédients peuvent être cuits plus rapidement en réduisant la section de passage de l'échappement de vapeur.

Aussi, un but de la présente invention est de proposer un appareil électroménager de préparation culinaire remédiant à ces inconvénients qui procure une bonne ergonomie d'utilisation et qui soit simple et économique à réaliser.

A cet effet, l'invention se rapporte à un appareil électroménager de préparation culinaire comportant un récipient de travail renfermant un outil entraîné en rotation par un moteur, un dispositif de chauffage du contenu du récipient de travail et un couvercle amovible venant fermer le récipient de travail, le couvercle comportant une ouverture pour l'introduction d'ingrédients dans le récipient de travail, au moins un orifice d'échappement de vapeur, et un bouchon doseur amovible venant se loger dans l'ouverture pour l'introduction d'ingrédients, caractérisé en ce que le bouchon doseur peut occuper au moins deux positions stables dans l'ouverture du couvercle et en ce que le déplacement du bouchon doseur d'une position stable à l'autre permet de faire varier la section de passage de l'orifice d'échappement de vapeur.

Par position stable, on entend une position que le bouchon doseur peut occuper durablement sans soutien manuel de la part de l'utilisateur.

Une telle caractéristique présente l'avantage de permettre à l'utilisateur d'adapter la section de passage de l'orifice d'échappement de vapeur à la recette à réaliser par un simple déplacement du bouchon doseur d'une position à une autre.

Selon une autre caractéristique de l'invention, le bouchon doseur peut occuper plusieurs positions stables successives dans l'ouverture, le déplacement du bouchon doseur d'une position stable à une autre permettant de faire varier de façon progressive la section de passage de l'orifice d'échappement de vapeur.

Selon une autre caractéristique de l'invention, le bouchon doseur est mobile en rotation dans l'ouverture, la rotation du bouchon doseur permettant de faire varier la section de passage de l'orifice d'échappement de vapeur.

Selon une autre caractéristique de l'invention, le couvercle comporte, autour de l'ouverture, une cheminée en saillie formant un logement de réception du bouchon doseur, l'orifice d'échappement de vapeur étant ménagé sur une paroi externe de la cheminée.

Selon encore une autre caractéristique de l'invention, le bouchon doseur comporte une jupe périphérique et peut être disposé dans l'ouverture dans une position dans laquelle une partie de la jupe périphérique vient masquer au moins partiellement l'orifice d'échappement de vapeur ménagé dans la paroi externe de la cheminée.

Selon encore une autre caractéristique de l'invention, la rotation du bouchon doseur dans la cheminée permet de faire varier le degré de recouvrement de l'orifice d'échappement de vapeur par la jupe périphérique.

Selon une autre caractéristique de l'invention, la rotation du bouchon doseur permet de réduire de 0 à 50% de la section de passage de l'orifice d'échappement de vapeur.

Selon une autre caractéristique de l'invention, la jupe périphérique comporte, sur un secteur angulaire particulier du bouchon doseur, une partie rallongée descendant plus bas que le reste de la jupe périphérique.

Selon une autre caractéristique de l'invention, la cheminée comporte une paroi interne en forme d'entonnoir s'étendant à l'intérieur de la paroi externe et définissant l'ouverture pour l'introduction des ingrédients, la paroi interne formant un logement de réception du bouchon doseur.

Selon une autre caractéristique de l'invention, le bouchon doseur comporte un corps en forme de gobelet venant s'engager dans l'ouverture à l'intérieur de la paroi interne de la cheminée.

Selon une autre caractéristique de l'invention, le corps comporte une surface externe comprenant au moins un ergot de verrouillage pouvant s'engager par rotation sous un bord inférieur de la paroi interne de la cheminée, la paroi interne comprenant au moins une gorge s'étendant axialement à l'ouverture permettant le passage de l'ergot de verrouillage lors de la mise en place et du retrait du bouchon doseur dans l'ouverture.

Selon une autre caractéristique de l'invention, l'appareil comporte un panneau de commande sur une face avant de l'appareil, l'orifice d'échappement de vapeur étant orienté vers la face arrière de l'appareil.

Selon une autre caractéristique de l'invention, l'appareil comporte un panier pour la cuisson à la vapeur venant reposer à l'intérieur du récipient de travail.

Selon une autre caractéristique de l'invention, le couvercle comporte un joint d'étanchéité venant reposer contre le récipient de travail lorsque le récipient de travail est fermé par le couvercle.

Une telle caractéristique permet d'assurer l'étanchéité du couvercle en bordure du récipient de travail de manière à ce que l'ensemble de la vapeur s'échappe par le ou les orifices d'échappement du couvercle prévus à cet effet.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective éclatée d'un appareil de préparation culinaire selon un mode particulier de réalisation de l'invention ;
- la figure 2 est une vue en coupe longitudinale de l'appareil de la figure 1 ;
- la figure 3 est une vue en perspective du dessous du couvercle équipant l'appareil de la figure 1 ;
- la figure 4 est une vue de dessus du couvercle de la figure 3;
- la figure 5 est une vue en coupe selon la ligne V-V de la figure 4 du couvercle et de la partie supérieure du récipient de travail ;
- la figure 6 est une vue en perspective du bouchon doseur équipant le couvercle de la figure 3 ;
- les figures 7 à 9 sont des vues en perspective de la face arrière de l'appareil de la figure 1 avec le bouchon doseur représenté respectivement démonté du couvercle, dans une position de réduction maximum de la section de passage de l'orifice d'échappement et dans une position intermédiaire de réduction de la section de passage de l'orifice d'échappement.

Seuls les éléments nécessaires à la compréhension de l'invention ont été représentés. Pour faciliter la lecture des dessins, les mêmes éléments portent les mêmes références d'une figure à l'autre.

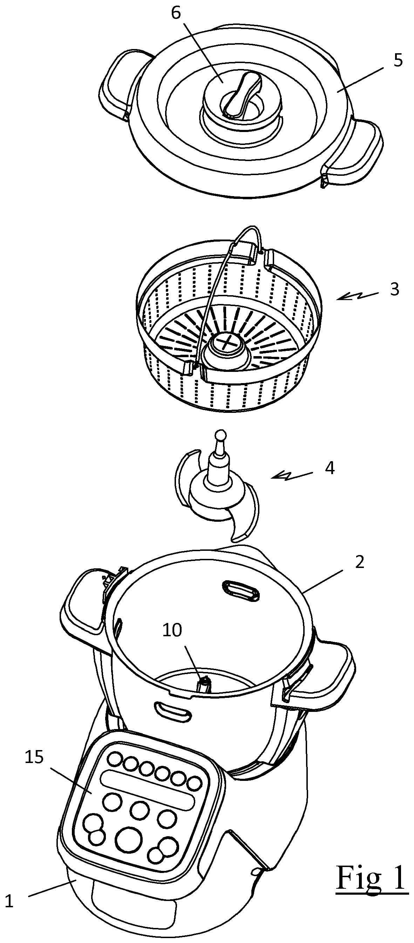

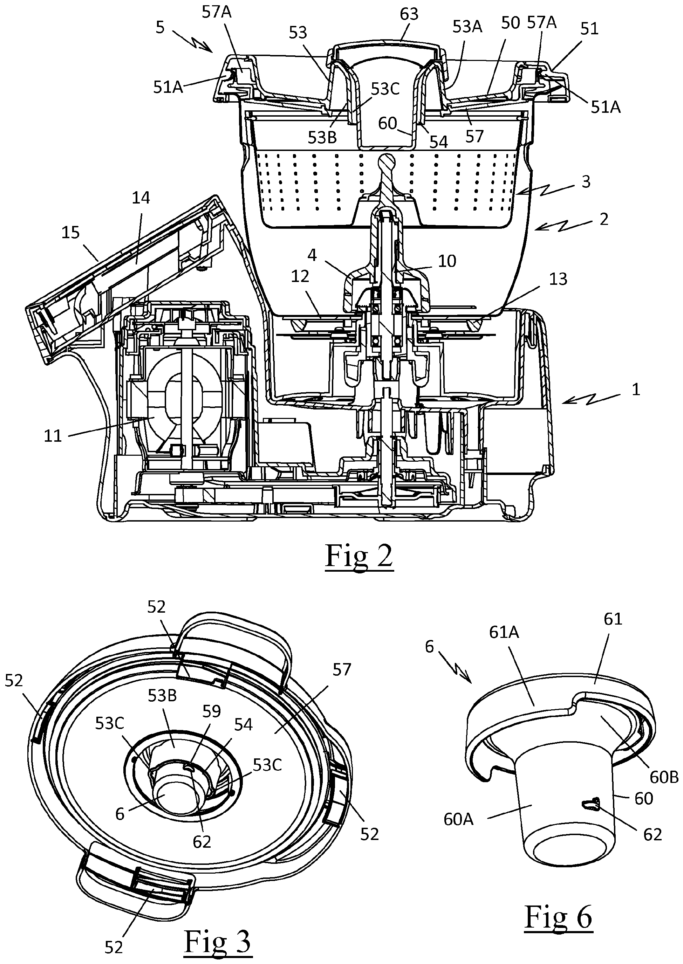

Les figures 1 et 2 représentent un appareil de préparation culinaire comportant un boîtier 1 et un récipient de travail 2 disposé de manière amovible sur le boîtier 1, le récipient de travail 2 comportant un panier 3 perforé prenant place dans la moitié supérieure du récipient de travail 2 et comprenant un fond équipé d'un entraîneur 10 rotatif relié par une chaine cinématique à un moteur 11, visible uniquement sur la figure 2, l'entraîneur 10 pouvant recevoir un outil 4 permettant de hacher les aliments disposés dans le fond du récipient de travail 2.

Le récipient de travail 2 est avantageusement réalisé en acier inox et repose sur une plaque 12 chauffante intégrée dans le boîtier 1, la plaque 12 comportant une face inférieure munie d'une résistance 13, du type résistance blindée, permettant de chauffer le contenu du récipient de travail 2.

La résistance 13 et le moteur 11 sont pilotés, de manière connue en soi, par une carte électronique 14 disposée sous un panneau de commande 15 présent sur une face avant du boîtier 1, cette carte électronique 14 recevant la valeur de la température mesurée par un palpeur de température et assurant la régulation de l'alimentation de la résistance 13 de façon à amener le contenu du récipient de travail 2 à une température de consigne.

Conformément à la figure 2, le récipient de travail 2 est fermé par un couvercle 5 amovible comprenant une paroi supérieure 50 transparente, réalisée en matériau plastique de la famille des copolyesters, tel que du Tritan^{™} commercialisé par la société Eastman, entourée par une couronne 51 périphérique en matériau thermoplastique présentant une meilleure tenue à la chaleur, tel que du PBT (téréphtalate de polybutylène), la couronne 51 supportant des verrous 52, visibles sur la figure 3, coopérant avec le bord supérieur du récipient de travail 2 pour assurer une liaison de type baïonnette.

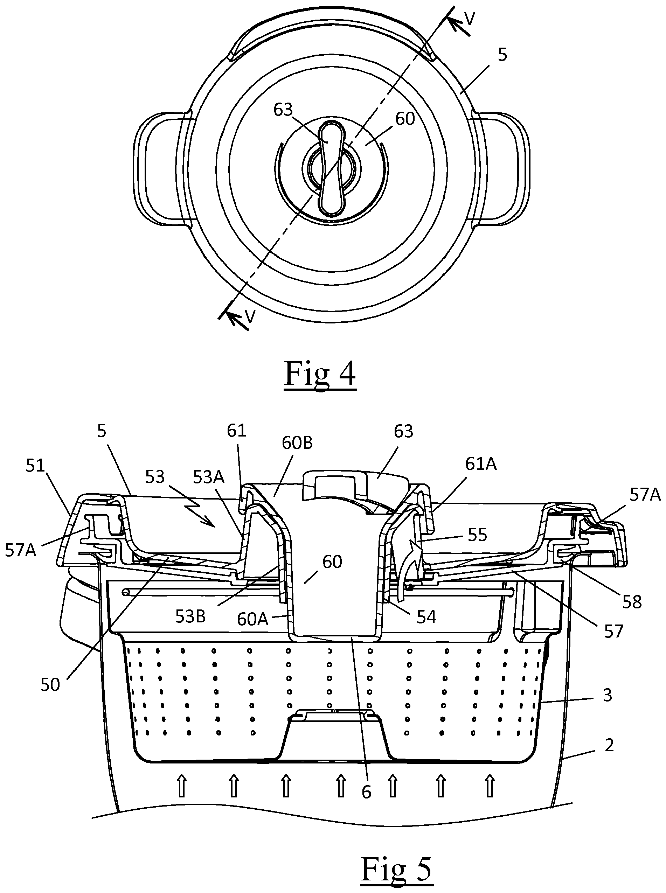

Conformément à la figure 5, la paroi supérieure 50 du couvercle comporte en son centre une cheminée 53 en saillie comprenant une paroi externe 53A tronconique et une paroi interne 53B en forme d'entonnoir plongeant à l'intérieur de la paroi externe 53A, la paroi interne 53B étant munie d'une ouverture 54 communiquant directement avec l'intérieur du récipient de travail 2 et formant un logement de réception pour un bouchon doseur 6.

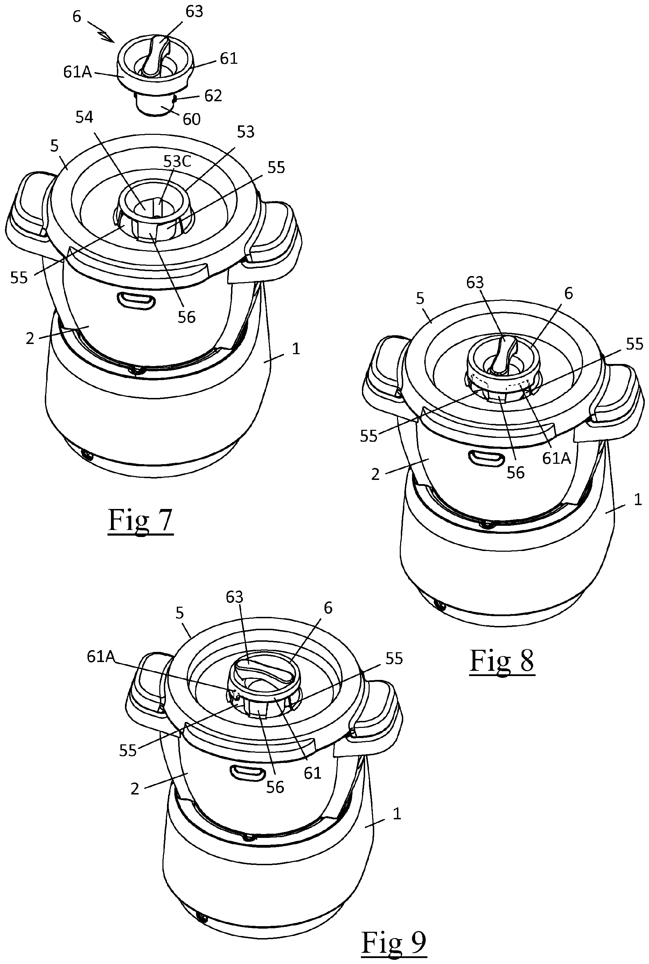

La paroi externe 53A de la cheminée 53 comporte des orifices 55 d'échappement de vapeur, mieux visibles sur la figure 7, orientés vers la face arrière de l'appareil et ménagés de part et d'autre d'un montant 56 de renfort, les orifices 55 s'étendant avantageusement sur une largeur de l'ordre de 3 cm et sur une hauteur de l'ordre de 2 cm correspondant sensiblement à la hauteur de la cheminée 53.

De manière préférentielle, le couvercle 5 comporte également une paroi inférieure 57, rapportée sous la paroi supérieure 50 du couvercle, avantageusement réalisée par moulage dans un matériau plastique transparent, tel que du polycarbonate ou du copolyester de type Tritan^{™}, la paroi inférieure 57 comprenant un orifice en regard de la cheminée 53 et étant montée mobile en rotation sous la paroi supérieure 50.

A titre d'exemple, la paroi inférieure 57 présente la forme d'un disque s'étendant radialement depuis une nervure formée à la base de la cheminée 53 centrale jusqu'à la couronne 51 périphérique du couvercle et comprend un bord périphérique supportant un joint d'étanchéité 58 venant reposer sur le bord supérieur du récipient de travail 2, la paroi inférieure 57 étant maintenue sur le couvercle 5 par des griffes de maintien 57A venant s'engager élastiquement sur des rails de guidage 51A ménagés à l'intérieur de la couronne 51, visibles sur la figure 2.

Conformément à la figure 6, le bouchon doseur 6 comporte un corps 60 en forme de gobelet comprenant une partie inférieure 60A cylindrique munie d'une extrémité inférieure fermée, la partie inférieure 60A comportant une surface interne avantageusement munie de graduations, non représentées sur les figures, permettant de mesurer le volume contenu dans le bouchon doseur 6.

Le corps 60 du bouchon doseur comporte également un partie supérieure 60B évasée supportant une jupe périphérique 61 s'étendant vers le bas et comportant, sur un secteur angulaire particulier, une partie rallongée 61A de manière à ce que la rotation du bouchon doseur 6 dans la cheminée 53 permet de faire varier la surface de recouvrement des orifices 55 d'échappement de la cheminée 53 par la jupe périphérique 61.

Dans l'exemple illustré sur les figures, la partie rallongée 61A de la jupe périphérique 61 s'étend angulairement sur un secteur de l'ordre de 130° et présente une hauteur de l'ordre de 2 cm, la jupe périphérique 61 présentant une hauteur de l'ordre de 1 cm sur le reste de sa périphérie.

De manière préférentielle, la partie inférieure 60A du bouchon doseur 6 présente un diamètre externe légèrement inférieur au diamètre interne de la paroi interne 53B de la cheminée 53 et supporte deux ergots 62 de verrouillage disposés à 180° l'un de l'autre, un seul étant visible sur les figures, ces deux ergots 62 venant s'engager dans des gorges 53C prévues à cet effet sur la paroi interne 53B de la cheminée 53 lors de la mise en place du bouchon doseur 6 dans l'ouverture 54, puis venant s'engager sous le bord inférieur de la paroi interne 53B de la cheminée lorsque le bouchon doseur 6 est tourné autour de son axe longitudinal après avoir été complètement engagé dans l'ouverture 54, c'est-à-dire lorsque la jupe périphérique 61 repose sur la cheminée 53.

La rotation du bouchon doseur 6 autour de son axe longitudinal lorsque le bouchon doseur 6 est complètement engagé dans l'ouverture 54 est avantageusement limitée par une butée 59, visible sur la figure 3, disposée sous le bord inférieur de la paroi interne 53B de la cheminée, la butée 59 coopérant avec les deux ergots 62 du bouchon doseur 6 pour stopper la rotation du bouchon doseur 6 dans le sens trigonométrique dans une première position, illustrée sur la figure 8, dans laquelle le recouvrement des orifices 55 par la partie rallongée 61A de la jupe périphérique 61 est maximum, et pour stopper la rotation du bouchon doseur 6 dans le sens inverse dans une deuxième position, non illustrée sur les figures, dans laquelle le recouvrement de l'orifice par la partie rallongée 61A de la jupe périphérique 61 est minimum.

Conformément aux figures 4 et 5, le bouchon doseur 6 comporte également une poignée 63 de préhension constituée par une pièce indépendante préférentiellement réalisée dans une matière plastique différente de celle du corps 60, pour limiter le transfert thermique vers la poignée 63. A titre d'exemple, le corps 60 du bouchon est réalisé en matière plastique transparente, telle que du polycarbonate ou du copolyester de type Tritan, et la poignée 6 de préhension est réalisée en polypropylène renforcé en fibres de verre à 30% ou en polyester saturé renforcé en fibres de verre à 20%.

Le fonctionnement de l'appareil va maintenant être décrit.

Lorsque l'utilisateur souhaite faire cuire des aliments dans le fond du récipient de travail 2 et/ou dans le panier 3 vapeur, il verse de l'eau dans le fond du récipient de travail 2, puis place les ingrédients à cuire dans le récipient de travail 2.

L'utilisateur pose ensuite le couvercle 5 sur le récipient de travail 2 puis le verrouille en le faisant tourner, le joint d'étanchéité 58 du couvercle 5 étant alors comprimé contre le bord supérieur du récipient de travail 2. L'utilisateur appuie alors sur un bouton du panneau de commande 15 de l'appareil pour démarrer un programme de cuisson automatique intégré dans la carte électronique 14, ce programme pilotant l'alimentation de la résistance 13 pour élever la température du fond du récipient de travail 2 et produire de la vapeur.

Lors de la phase de cuisson, la vapeur générée dans le récipient de travail 2, illustrée par des flèches sur la figure 5, s'échappe à l'extérieur du récipient de travail 2 par les orifices 55 d'échappement de vapeur ménagés dans la paroi externe 53A de la cheminée.

Conformément à l'invention, la section de passage de vapeur au travers de ces orifices 55 peut être modulée en déplaçant le bouchon doseur 6 dans l'ouverture 54 et en particulier en le faisant tourner pour amener la partie rallongée 61A de la jupe périphérique 61 plus ou moins en regard des orifices 55.

Ainsi, lors de la cuisson d'aliments peu sensibles à la chaleur, la cuisson peut être accélérée en plaçant le bouchon doseur 6 dans la position illustrée à la figure 8 de manière à ce que la partie rallongée 61A de la jupe périphérique 61 du bouchon doseur 6 vienne en regard des orifices 55 et réduise de l'ordre de 40 % de la section de passage pour l'échappement de vapeur, la section de passage résultante restant suffisante pour éviter une montée en pression dans le récipient de travail 2.

A l'inverse, lors de la cuisson d'aliments sensibles à la chaleur, le bouchon doseur 6 sera tourné de 180° de manière à amener la partie rallongée 61A à l'opposé des orifices d'échappement de la paroi externe, vers l'avant de l'appareil, les orifices 55 se trouvant alors totalement dégagés et offrant ainsi une ouverture maximum pour l'échappement de vapeur.

Bien entendu, le bouchon doseur 6 pourra également être disposé dans une position intermédiaire et par exemple être disposé dans la position illustrée sur la figure 9 dans laquelle la partie rallongée 61A de la jupe périphérique 61 ne masque qu'une faible partie d'un des deux orifices 55 d'échappement de vapeur.

Un tel appareil de préparation culinaire présente donc l'avantage de comporter un couvercle 5 comprenant une ouverture 54 permettant l'introduction d'ingrédients dans le récipient de travail 2 sans ouvrir le couvercle 5 et un bouchon doseur 6, venant se loger dans cette ouverture 54, qui peut occuper différentes positions, permettant de faire varier la section de passage des orifices 55 d'échappement du couvercle 5 pour l'adapter au type d'aliment à cuire, une ouverture maximale étant recommandée pour les aliments les plus fragiles et une ouverture réduite étant utile pour accélérer la cuisson des aliments les moins fragiles.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le bouchon doseur pourra être relié à la cheminée du couvercle par une liaison de type hélice de sorte que la rotation du bouchon doseur sur la cheminée provoque également une variation de la hauteur du bouchon doseur sur la cheminée.

Dans une autre variante de réalisation non représentée, le bouchon doseur pourra comporter un dispositif de fixation assurant son maintien à différentes hauteurs dans la cheminée du couvercle de manière à faire varier la section de passage de vapeur par simple translation longitudinal du bouchon doseur dans l'ouverture de la cheminée.

## Revendications

1. Appareil électroménager de préparation culinaire comportant un récipient de travail (2) renfermant un outil (4) entraîné en rotation par un moteur (11), un dispositif de chauffage (13) du contenu du récipient de travail (2) et un couvercle (5) amovible venant fermer le récipient de travail (2), le couvercle (5) comportant une ouverture (54) pour l'introduction d'ingrédients dans le récipient de travail (2), au moins un orifice (55) d'échappement de vapeur, et un bouchon doseur (6) amovible venant se loger dans ladite ouverture (54) pour l'introduction d'ingrédients, **caractérisé en ce que** le bouchon doseur (6) peut occuper au moins deux positions stables dans ladite ouverture (54) du couvercle (5) et **en ce que** le déplacement du bouchon doseur (6) d'une position stable à l'autre permet de faire varier la section de passage de l'orifice (55) d'échappement de vapeur.

2. Appareil électroménager de préparation culinaire selon la revendication 1, **caractérisé en ce que** le bouchon doseur (6) peut occuper plusieurs positions stables successives dans l'ouverture (54) et **en ce que** le déplacement du bouchon doseur (6) d'une position stable à une autre permet de faire varier de façon progressive la section de passage de l'orifice (55) d'échappement de vapeur.

3. Appareil électroménager de préparation culinaire selon l'une quelconque des revendications 1 à 2, **caractérisé en ce que** le bouchon doseur (6) est mobile en rotation dans l'ouverture (54) et **en ce que** la rotation du bouchon doseur (6) permet de faire varier la section de passage de l'orifice (55) d'échappement de vapeur.

4. Appareil électroménager de préparation culinaire selon l'une quelconque des revendications 1 à 3, **caractérisé en ce que** le couvercle (5) comporte, autour de ladite ouverture (54), une cheminée (53) en saillie formant un logement de réception du bouchon doseur (6) et **en ce que** ledit orifice (55) d'échappement de vapeur est ménagé sur une paroi externe (53A) de la cheminée (53).

5. Appareil électroménager de préparation culinaire selon la revendication 4, **caractérisé en ce que** le bouchon doseur (6) comporte une jupe périphérique (61) et peut être disposé dans l'ouverture (54) dans une position dans laquelle une partie (61A) de la jupe périphérique (61) vient masquer au moins partiellement l'orifice (55) d'échappement de vapeur ménagé dans la paroi externe (53A) de la cheminée (53).

6. Appareil électroménager de préparation culinaire selon la revendication 5, **caractérisé en ce que** la rotation du bouchon doseur (6) dans la cheminée (53) permet de faire varier le degré de recouvrement de l'orifice (55) d'échappement de vapeur par la jupe périphérique (61).

7. Appareil électroménager de préparation culinaire selon la revendication 6, **caractérisé en ce que** la rotation du bouchon doseur (6) permet de réduire de 0 à 50% de la section de passage de l'orifice (55) d'échappement de vapeur.

8. Appareil électroménager de préparation culinaire selon l'une quelconque des revendications 5 à 7, **caractérisé en ce que** la jupe périphérique (61) comporte, sur un secteur angulaire particulier du bouchon doseur (6), une partie rallongée (61A) descendant plus bas que le reste de la jupe périphérique (61).

9. Appareil électroménager de préparation culinaire selon l'une quelconque des revendications 4 à 8, **caractérisé en ce que** la cheminée (53) comporte une paroi interne (53B) en forme d'entonnoir s'étendant à l'intérieur de la paroi externe (53A) et définissant l'ouverture (54) pour l'introduction des ingrédients, ladite paroi interne (53B) formant un logement de réception du bouchon doseur (6).

10. Appareil électroménager de préparation culinaire selon la revendication 9, **caractérisé en ce que** le bouchon doseur (6) comporte un corps (60) en forme de gobelet venant s'engager dans l'ouverture (54) à l'intérieur de la paroi interne (53B) de la cheminée (53).

11. Appareil électroménager de préparation culinaire selon l'une quelconque des revendications 1 à 10, **caractérisé en ce qu'**il comporte un panneau de commande (15) sur une face avant de l'appareil et **en ce que** l'orifice (55) d'échappement de vapeur est orienté vers la face arrière de l'appareil.

12. Appareil électroménager de préparation culinaire selon l'une quelconque des revendications 1 à 11, **caractérisé en ce qu'**il comporte un panier (3) pour la cuisson à la vapeur venant reposer à l'intérieur du récipient de travail (2).

13. Appareil électroménager de préparation culinaire selon l'une quelconque des revendications 1 à 12, **caractérisé en ce que** le couvercle (5) comporte un joint d'étanchéité (58) venant reposer contre le récipient de travail (2) lorsque le récipient de travail (2) est fermé par le couvercle (5).

## Patentansprüche

1. Elektrohaushaltsgerät zur Nahrungsmittelzubereitung, das einen Arbeitsbehälter (2), der ein Werkzeug (4) umschließt, das durch einen Motor (11) in Drehung angetrieben wird, eine Vorrichtung zur Heizung (13) des Inhalts des Arbeitsbehälters (2) und einen Deckel (5) umfasst, der abnehmbar den Arbeitsbehälter (2) verschließt, wobei der Deckel (5) eine Öffnung (54) für die Einführung von Zutaten in den Arbeitsbehälter (2), mindestens eine Öffnung (55) zum Abführen von Dampf, und eine Dosierkappe (6) umfasst, die lösbar in der Öffnung (54) für die Einführung der Zutaten untergebracht ist, **dadurch gekennzeichnet, dass** die Messkappe (6) mindestens zwei stabile Positionen in der Öffnung (54) des Deckels (5) einnehmen kann, und dass die Verschiebung (6) der Messkappe von einer stabilen Position zur anderen es ermöglicht, den Durchgangsabschnitt der Öffnung (55) zum Abführen von Dampf zu variieren.

2. Elektrohaushaltsgerät zur Nahrungszubereitung nach Anspruch 1, **dadurch gekennzeichnet, dass** die Messkappe (6) mehrere aufeinanderfolgende stabile Positionen in der Öffnung (54) einnehmen kann, und dass die Verschiebung (6) der Messkappe von einer stabilen Position zu einer anderen es ermöglicht, schrittweise den Durchgangsabschnitt der Öffnung (55) des Dampfauslasses zu variieren.

3. Elektrohaushaltsgerät zur Nahrungszubereitung nach einem der Ansprüche 1 bis 2, **dadurch gekennzeichnet, dass** die Dosierkappe (6) in der Öffnung (54) drehbar ist, und dass es die Drehung der Dosierkappe (6) ermöglicht, den Durchgangsabschnitt der Öffnung (55) zum Abführen von Dampf zu variieren.

4. Elektrohaushaltsgerät zur Nahrungszubereitung nach einem der Ansprüche 1 bis 3, **dadurch gekennzeichnet, dass** der Deckel (5) um die Öffnung (54) einen hervorstehenden Kamin (53) umfasst, der eine Ausnehmung zur Aufnahme der Dosierkappe (6) bildet, und dass die Öffnung (55) zum Abführen von Dampf auf einer Außenwand (53A) des Kamins (53) angeordnet ist.

5. Elektrohaushaltsgerät zur Nahrungszubereitung nach Anspruch 4, **dadurch gekennzeichnet, dass** die Dosierkappe (6) eine Umfangsschürze (61) umfasst und in der Öffnung (54) in einer Position angeordnet werden kann, in der ein Teil (61A) der peripheren Schürze (61) zumindest teilweise die Öffnung (55) zum Abführen von Dampf abdeckt, die in der äußeren Wand (53A) des Kamins (53) aufgenommen ist.

6. Elektrohaushaltsgerät zur Nahrungszubereitung nach Anspruch 5, **dadurch gekennzeichnet, dass** es die Drehung der Dosierkappe (6) in dem Kamin (53) erlaubt, den Grad der Überlappung der Öffnung (55) zum Abführen von Dampf durch die periphere Schürze (61) zu variieren.

7. Elektrohaushaltsgerät zur Nahrungsmittelzubereitung nach Anspruch 6, **dadurch gekennzeichnet, dass** es die Drehung der Dosierkappe (6) ermöglicht, den Durchgangsabschnitt der Öffnung (55) zum Abführen von Dampf von 0 bis 50 % zu reduzieren.

8. Elektrohaushaltsgerät zur Nahrungszubereitung nach einem der Ansprüche 5 bis 7, **dadurch gekennzeichnet, dass** die periphere Schürze (61) auf einen bestimmten Winkelsektor der Dosierkappe (6) einen verlängerten Abschnitt (61A) umfasst, der weiter nach unten als der Rest der peripheren Schürze (61) heruntergeht.

9. Elektrohaushaltsgerät zur Nahrungszubereitung nach einem der Ansprüche 4 bis 8, **dadurch gekennzeichnet, dass** der Kamin (53) eine innere trichterförmige Wand (53B) umfasst, die sich innerhalb der Außenwand (53A) erstreckt und die Öffnung (54) für die Einführung von Zutaten definiert, wobei die innere Wand (53B) eine Ausnehmung zur Aufnahme der Dosierkappe (6) bildet.

10. Elektrohaushaltsgerät zur Nahrungszubereitung nach Anspruch 9, **dadurch gekennzeichnet, dass** die Messkappe (6) einen als Schale geformten Körper (60) umfasst, der in die Öffnung (54) im Inneren der internen Wand (53B) des Kamins (53) eingreift.

11. Elektrohaushaltsgerät zur Nahrungszubereitung nach einem der Ansprüche 1 bis 10, **dadurch gekennzeichnet, dass** es eine Steuertafel (15) an einer Stirnseite der Vorrichtung umfasst, und dass die Öffnung (55) zum Abführen von Dampf zu der Rückseite des Geräts ausgerichtet ist.

12. Elektrohaushaltsgerät zur Nahrungszubereitung nach einem der Ansprüche 1 bis 11, **dadurch gekennzeichnet, dass** es einen Korb (3) für das Dampfkochen umfasst, der im Inneren des Arbeitsbehälters (2) aufliegt.

13. Elektrohaushaltsgerät zur Nahrungszubereitung nach einem der Ansprüche 1 bis 12, **dadurch gekennzeichnet, dass** der Deckel (5) eine Dichtung (58) umfasst, die an dem Arbeitsbehälter (2) anliegt, wenn der Arbeitsbehälter (2) durch den Deckel (5) verschlossen ist.

## Claims

1. Electrical food preparation appliance comprising a working container (2) enclosing a tool (4) rotated by a motor (11), a device for heating (13) the contents of the working container (2) and a removable lid (5) that covers the working container (2), the lid (5) comprising an opening (54) for inserting ingredients into the working container (2), at least one steam exhaust orifice (55), and a removable measuring cap (6) accommodated into said opening (54) for inserting ingredients, **characterised in that** the measuring cap (6) can occupy at least two stable positions in said opening (54) of the lid (5) and **in that** the movement of the measuring cap (6) from one stable position to the other makes it possible to vary the passage cross-section of the steam exhaust orifice (55).

2. Electrical food preparation appliance according to claim 1, **characterised in that** the measuring cap (6) can occupy a plurality of successive stable positions in the opening (54) and **in that** the movement of the measuring cap (6) from one stable position to the other makes it possible to vary in a progressive manner the passage cross-section of the steam exhaust orifice (55).

3. Electrical food preparation appliance according to any one of claims 1 to 2, **characterised in that** the measuring cap (6) is rotatable in the opening (54) and **in that** the rotation of the measuring cap (6) makes it possible to vary the passage cross-section of the steam exhaust orifice (55).

4. Electrical food preparation appliance according to any one of claims 1 to 3, **characterised in that** the lid (5) comprises, around said opening (54), a projecting funnel (53) forming a housing for receiving the measuring cap (6) and **in that** said steam exhaust orifice (55) is arranged on an external wall (53A) of the funnel (53).

5. Electrical food preparation appliance according to claim 4, **characterised in that** the measuring cap (6) comprises a peripheral skirt (61) and can be placed in the opening (54) in a position wherein a portion (61A) of the peripheral skirt (61) covers at least partially the steam exhaust orifice (55) arranged in the external wall (53A) of the funnel (53).

6. Electrical food preparation appliance according to claim 5, **characterised in that** the rotation of the measuring cap (6) in the funnel (53) makes it possible to vary the degree to which the steam exhaust orifice (55) is covered by the peripheral skirt (61).

7. Electrical food preparation appliance according to claim 6, **characterised in that** the rotation of the measuring cap (6) makes it possible to reduce the passage cross-section of the steam exhaust orifice (55) from 0 to 50%.

8. Electrical food preparation appliance according to any one of claims 5 to 7, **characterised in that** the peripheral skirt (61) comprises, on a specific angular section of the measuring cap (6), an extended portion (61A) descending lower than the remainder of the peripheral skirt (61).

9. Electrical food preparation appliance according to any one of claims 4 to 8, **characterised in that** the funnel (53) comprises a cone-shaped internal wall (53B) extending inside the external wall (53A) and defining the opening (54) for inserting ingredients, said internal wall (53B) forming a housing for receiving the measuring cap (6).

10. Electrical food preparation appliance according to claim 9, **characterised in that** the measuring cap (6) comprises a cup-shaped body (60) that is inserted into the opening (54) inside the internal wall (53B) of the funnel (53).

11. Electrical food preparation appliance according to any one of claims 1 to 10, **characterised in that** it comprises a control panel (15) on a front face of the appliance and **in that** the steam exhaust orifice (55) is orientated towards the rear face of the appliance.

12. Electrical food preparation appliance according to any one of claims 1 to 11, **characterised in that** it comprises a basket (3) for steam cooking that rests inside the working container (2).

13. Electrical food preparation appliance according to any one of claims 1 to 12, **characterised in that** the lid (5) comprises a seal (58) that rests against the working container (2) when the working container (2) is covered by the lid (5).
